# EUROPEAN PATENT SPECIFICATION

(11) **EP 1 842 886 B1**
(45) Date of publication and mention of the grant of the patent: **06.08.2008**
(21) Application number: 06425246.3
(22) Date of filing: 07.04.2006
(51) Int. Cl.: C09J 5/00

(54) **An adhesive stick, a method for manufacturing the adhesive stick and a heat insulating profile comprising the adhesive stick**
Ein Klebstift, ein Verfahren zur Herstellung des Klebstifts und ein wärmeisolierendes Profil aud dem Klebstift
Un baton adhésif, un procédé pour la production du baton adhésif et un profilé thermiquement isolant comprenant le baton adhésif

(43) Date of publication of application: 10.10.2007
(73) Proprietor: Alfa Solare S.A., 47891 Galazzano (SM)
(72) Inventor: Cardelli, Giuseppe, 47892 Acquaviva (SM)
(74) Representative: Ghioni, Carlo Raoul Maria

(56) References cited:
- DE-A1- 19 547 845
- DE-A1- 19 719 509
- US-A1- 2004 202 810

## Description

This invention has for an object an adhesive stick, a method for manufacturing the adhesive stick and a heat insulating profile comprising the adhesive stick.

Documents DE19547845 and DE 19719509 disclose heat insulating panels and document US2004/0202810 discloses an elastomeric joint tape used in the fabrication of panelized wall systems.

Heat insulating profiles are normally used to minimise heat loss between two environments. Such profiles are usually fitted between two separate, thermally conductive profiles in order to create a thermal break. The first thermally conductive profile is in thermal contact with the first environment, while the second profile is in thermal contact with the second environment. Thermal breaks are advantageously applicable to cold storage installations, to door and window frames and to any other elements used to separate two environments whose temperatures differ significantly. The thermally conductive profiles are usually made of aluminium and the heat insulating profile is made of polyamide since these two materials have similar expansion coefficients. This helps to prevent internal stress that might reduce the mechanical strength and efficiency of the system.

The heat insulating profile is connected to the thermally conductive profiles prior to coating in a powder coating oven. The insulating profile normally comprises specially-shaped tongue portions that slot into matching grooves in the thermally conductive profiles. After insertion, the tongue and groove portions are fastened to each other. Since the polymerisation of the coating powders requires temperatures of around 180°-200°C for approximately 20 minutes, the heat insulating profiles have to resist these extreme conditions. After joining the heat insulating profile to the thermally conductive profiles, the assembly is tested for tensile strength. This tensile test measures the resistance to tensile stress of the first and second thermally conductive profiles after they have been assembled. During the test, the profiles are subjected to two opposite pulling forces, a first force applied to the first thermally conductive profile and a second force applied to the second thermally conductive profile. The coating process usually reduces the tensile strength of the assembled profile by approximately 30%. This is because the powder polymerisation process results in small dimensional changes and the polyamide constituting the heat insulating profile tends to lose a certain amount of moisture, which leads to a reduction in size.

To avoid tensile strength becoming too low as a result of coating, an adhesive stick is applied to the inside of one or more longitudinal grooves in the insulating profile. The groove is in contact with a surface of the thermally conductive profile. During the powder coating process, the adhesive is heated, increases in volume, melts and escapes from the groove, pressing against the surface of the thermally conductive profile and improving the adhesion between the insulating profile and the conductive profiles.

The insulating profiles described above have several disadvantages.

The assembled insulating and conductive profiles in bars 6 metres long are normally placed vertically in the coating oven. As the adhesive heats, it melts and some of it trickles down to the bottom of the bars, thus dirtying the oven. At the top ends of the bars, the amount of adhesive that remains between the heat insulating profile and the thermally conductive profile is greatly reduced which means that the adhesion between the heat insulating profile and the thermally conductive profile is reduced. Positioning the bar horizontally with overhanging parts is not possible because the intermediate support points on which it would have to rest would reduce the effectiveness of the coating process. Without these intermediate support points, on the other hand, the bar would be subject to unacceptable deformation as a result of the high temperatures reached.

To overcome this problem, the ends of the grooves in the heat insulating profile that accommodate the adhesive stick have polyamide plugs inserted into them in order to hold back the adhesive and prevent it from dripping onto the oven floor. This type of insulating profile is also not free of disadvantages. Heat insulating profiles with adhesive sticks inserted in the grooves are normally manufactured in lengths much greater than 6 metres. After being assembled with the thermally conductive profiles, the assembled bars are cut into shorter sections suitable for oven coating. Thus, only the first section obtained by cutting the original insulating profile is plugged whilst there are no plugs at the ends of the other sections, which thus remain exposed to the above mentioned problems.

The aim of the present invention is to overcome the above-mentioned disadvantages by providing an adhesive stick and a heat insulating profile comprising said stick enabling the adhesive to remain uniformly spread between the heat insulating profile and the thermally conductive profile; this uniformity being advantageously achieved along the whole length of the coupling between the heat insulating profile and the thermally conductive profile.

Another aim of the invention is to enable the adhesive stick to remain in close contact with both the heat insulating profile and the thermally conductive profile.

Yet another aim of the invention is to prevent the adhesive from dirtying the oven.

Yet another aim of the invention is to provide a method for manufacturing said adhesive stick.

These aims and others, which are more apparent in the description which follows, are achieved, in accordance with the present invention, by an adhesive stick and by a heat insulating profile comprising said stick having the structural and functional characteristics described in the independent claims herein, alternative embodiments of the invention being described in the dependent claims.

The invention is described in more detail below, with reference to the accompanying drawings, which illustrate a preferred embodiment of it.

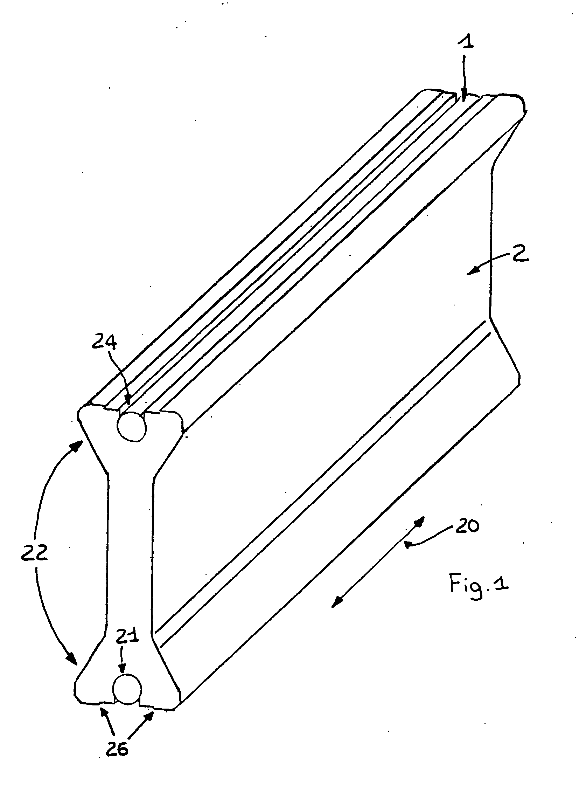

- Figure 1 is a perspective view of a heat insulating profile and of an adhesive stick according to the invention.

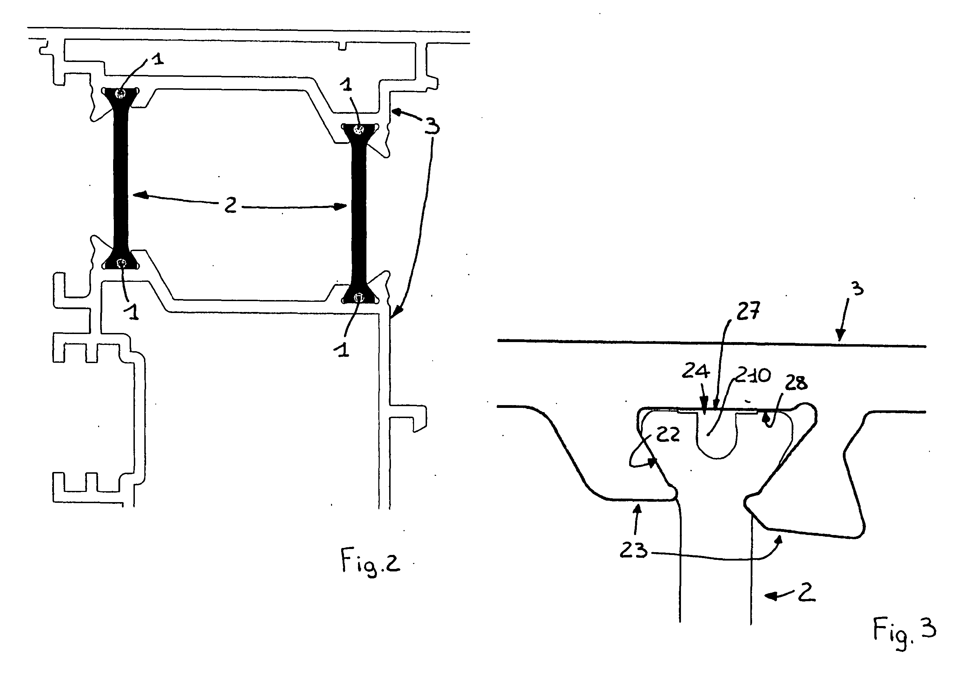

- Figure 2 is a cross section showing a specific application according to the invention.
- Figure 3 is a scaled-up view of a detail from Figure 2.

With reference to the accompanying drawings, the reference numeral 1 denotes an adhesive stick.

The adhesive stick 1 is applicable to a heat insulating profile 2. The heat insulating profile 2 can be interposed between thermally conductive profiles 3 to create a thermal break. The adhesive stick 1 characteristically comprises a mixture which in turn comprises an adhesive and an inert drip retaining agent.

The mixture comprises 30% to 50% by weight of the inert drip retaining agent. The mixture comprises 50% to 70% by weight of the adhesive. More specifically, the mixture comprises 30% to 50% by weight of the inert drip retaining agent and accordingly 70% t o 50% by weight of the adhesive. In a preferred embodiment, the mixture comprises approximately 45% by weight of the inert drip retaining agent and approximately 55% by weight of the adhesive. Very small quantities of pigment (for example 0.5% by weight) may also be present. Before being mixed, the adhesive and the inert drip retaining agent are advantageously in a granular form.

The mixture of the adhesive and inert drip retaining agent is preferably heterogeneous. Separate phases (that is, physically homogeneous portions of a balanced system) can therefore be identified. In particular, the adhesive and the inert drip retaining agent are uniformly distributed in the mixture. This permits homogeneous expansion of the stick 1. The inert drip retaining agent helps to hold back the molten adhesive during the high-temperature oven coating of an assembly consisting of one or more heat insulating profiles 2 and of the thermally conductive profiles 3. This prevents the adhesive in the stick 1 from dripping to the bottom of the oven. The adhesive thus remains uniformly distributed along the full length of the heat insulating profile 2. This counteracts the tendency of the adhesive to trickle down to the lowermost portions of the heat insulating profile 2.

Advantageously, the inert drip retaining agent does not react chemically with the adhesive.

The inert drip retaining agent remains in the solid state at least at temperatures of up to 200°C. The inert drip retaining agent thus remains in the solid state during the oven coating process.

Advantageously, the inert drip retaining agent comprises a thermoplastic resin.

Advantageously, the inert drip retaining agent comprises a polyamide.

In particular the inert drip retaining agent preferably consists of polyamide.

In an example, the inert drip retaining agent comprises a high viscosity polyamide 6.

The adhesive expands when the temperature increases. Said adhesive comprises a copolymer of ethylene and acrylic acid. When heated, the adhesive tends to melt and to increase in volume. The adhesive stick 1, once it has expanded as a result of heating (typically by oven coating) remains in the expanded state even after it cools down.

The adhesive suitably comprises from 6% to 15% by weight of acrylic acid. The acrylic acid enhances the adhesion of the stick 1 to the thermally conductive profile. The presence of acrylic acid in concentrations higher than that indicated above does not appear to produce additional benefits.

For this reason, the adhesive preferably comprises 9% by weight of acrylic acid.

Prior to heating, the adhesive stick 1 has a diameter of between 1.1 millimetres and 1.3 millimetres. In one specific embodiment, this diameter advantageously has a tolerance of a few hundredths of a millimetre relative to the nominal value of 1.2 millimetres.

This invention also has for an object a heat insulating profile 2 that can be interposed between two thermally conductive profiles 3 to create a thermal break. The thermally conductive profiles 3 are made preferably of aluminium. The heat insulating profile 2 comprises an adhesive stick 1 having the technical characteristics described above. The heat insulating profile 2 is advantageously made of polyamide. The heat insulating profile 2 advantageously comprises suitably shaped portions 22 enabling the insulating profile 2 to be connected to portions 23 of matching shape made in the thermally conductive profile 3. The shaped portions 22 of the heat insulating profile 2 are preferably slotted into the matching portions 23 in the thermally conductive profile 3.

The heat insulating profile 2 extends principally in a longitudinal direction 20. The heat insulating profile 2 comprises a groove 21 that extends in the longitudinal direction 20. The longitudinal groove 21 advantageously extends for the full length of the heat insulating profile 2, from one end to the other. The groove 21 forms an internal space 210.

In section transversal to the longitudinal direction, the space 210 formed by the groove 21 communicates directly with the outside through an opening 24 of the groove 21. The opening 24 can advantageously be placed against a first surface 28 of the thermally conductive profile 3. In use, the opening 24 of the groove 21 is kept a t a predetermined distance from the first surface 28 of the thermally conductive profile 3 by means of two steps 26 made on the heat insulating profile 2. The space formed by the first surface 28 of the thermally conductive profile 3 and by the steps 26 advantageously constitutes a chamber 27 for accommodating the adhesive stick 1 following its expansion as a result of heating. Before the heat insulating profile 2 is inserted into the thermally conductive profile 3, the adhesive stick 1 is confined within the space 210 formed by the groove 21. Thus, the heat insulating profile 2 can be slid smoothly and without difficulty into the matching portions 23 of the thermally conductive profiles 3.

The invention also relates to a method for manufacturing an adhesive stick 1 that is applicable to a heat insulating profile 2. The heat insulating profile 2 can be interposed between thermally conductive profiles 3 to create a thermal break. The method characteristically comprises the step of mixing the adhesive and the inert drip retaining agent to obtain a mixture. The method also comprises the step of shaping the mixture of adhesive and inert drip retaining agent to make the adhesive stick 1.

The adhesive stick 1 is applicable to a heat insulating profile 2. The heat insulating profile 2 can be interposed between thermally conductive profiles 3 to create a thermal break. The adhesive stick 1 characteristically comprises a mixture which in turn comprises an adhesive and an inert drip retaining agent. The mixture comprises 30% to 50% by weight of the inert drip retaining agent. The mixture comprises 50% to 70% by weight of the adhesive. More specifically, the mixture comprises 30% to 50% by weight of the inert drip retaining agent and accordingly 70% t o 50% b y weight of the adhesive. In a preferred embodiment, the mixture comprises approximately 45% by weight of the inert drip retaining agent and approximately 55% by weight of the adhesive. Very small quantities of pigment (for example 0.5% by weight) may also be present. Before being mixed, the adhesive and the inert drip retaining agent are advantageously in a granular form.

The mixing of these two ingredients advantageously occurs in a gravimetric blender. Advantageously the mixture occurs at ambient temperature.

The mixture of the adhesive and inert drip retaining agent is preferably heterogeneous. Separate phases (that is, physically homogeneous portions of a balanced system) can therefore be identified. In particular, the adhesive and the inert drip retaining agent are uniformly distributed in the mixture. This permits homogeneous expansion of the stick 1. The inert drip retaining agent helps to hold back the molten adhesive during the high-temperature oven coating of an assembly consisting of one or more heat insulating profiles 2 and of the thermally conductive profiles 3. This prevents the adhesive stick 1 from dripping to the bottom of the oven.

The adhesive thus remains uniformly distributed along the full length of the heat insulating profile 2. This counteracts the tendency of the adhesive to trickle down to the lowermost portions of the heat insulating profile 2.

Advantageously, the inert drip retaining agent does not react chemically with the adhesive.

The inert drip retaining agent remains in the solid state at least at temperatures below 200°C. The inert drip retaining agent thus remains in the solid state during the oven coating process.

Advantageously, the inert drip retaining agent comprises a thermoplastic resin.

Advantageously, the inert drip retaining agent comprises a polyamide.

In particular the inert drip retaining agent preferably consists of polyamide.

In an example the inert drip retaining agent comprises a high viscosity polyamide 6. The adhesive expands when the temperature increases. Said adhesive comprises a copolymer of ethylene and acrylic acid. When heated, the adhesive tends to melt and to increase in volume. The adhesive stick 1, once it has expanded as a result of heating (typically by oven coating) remains in the expanded state even after it cools down.

The adhesive suitably comprises from 6% to 15% by weight of acrylic acid. The acrylic acid enhances the adhesion of the stick 1 to the thermally conductive profile. The presence of acrylic acid in concentrations higher than that indicated above does not appear to produce additional benefits.

For this reason, the adhesive preferably comprises 9% by weight of acrylic acid.

Prior to heating, the adhesive stick 1 has a diameter of between 1.1 millimetres and 1.3 millimetres. In one specific embodiment, this diameter advantageously has a tolerance of a few hundredths of a millimetre relative to the nominal value of 1.2 millimetres.

Advantageously, the method comprises the further step of drying the adhesive and the inert drip retaining agent prior to the mixing step.

The method also comprises the step of heating the mixture to a softening point in order to facilitate shaping. The shaping step comprises the step of crushing the mixture to better blend the adhesive and the inert drip retaining agent. Advantageously, crushing is performed in a granulator.

The shaping step comprises the step of extruding the mixture. The extrusion step usually occurs after the crushing step. The extrusion temperature is preferably 220°C-250°C.

In use, when the adhesive stick 1 is heated in the coating oven, its transversal dimensions increase. Expansion causes the stick 1 to protrude from the s pace 210 through the opening 24 of the groove 21.

The stick 1 thus comes into contact with the surface 28 of the thermally conductive profile 3 facing the opening 24. The stick 1 remains in close contact with the thermally conductive profile 3 and with the heat insulating profile 2. In particular, the stick 1 remains in the expanded state even after it cools down and exerts pressure on this surface of the thermally conductive profile 3. This increases the tensile strength of the joint between the heat insulating profile 2 and the thermally conductive profile 3. The tensile strength of the joint between the heat insulating profile 2 and the thermally conductive profile 3 is also improved by the adhesive action of the acrylic acid in the adhesive. Consequently, the resistance to slipping between the two thermally conductive profiles 3 is increased.

The invention brings important advantages.

First of all, it prevents dirtying the oven with adhesive.

Secondly, it provides a stable connection between the heat insulating profile and the thermally conductive profiles between which the insulating profile is interposed.

Moreover, all details of the invention may be substituted by other technically equivalent elements.

In practice, all of the materials used, as well as the dimensions may be any, according to requirements.

## Claims

1. An adhesive stick applicable to a heat insulating profile, the heat insulating profile being in turn designed to be interposed between thermally conductive profiles to create a thermal break, the adhesive stick being **characterised in that** it comprises a mixture comprising an adhesive and an inert drip retaining agent.

2. The adhesive stick according to claim 1, **characterised in that** the mixture comprises 30% to 50% by weight of the inert drip retaining agent and, accordingly, 70% to 50% by weight of the adhesive.

3. The adhesive stick according to claim 1 or 2, **characterised in that** the mixture of adhesive and inert drip retaining agent is heterogeneous.

4. The adhesive stick according to claim 1 or 2 or 3, **characterised in that** the adhesive and the inert drip retaining agent mixture are uniformly distributed in the mixture.

5. The adhesive stick according to any of the foregoing claims from 1 to 4, **characterised in that** the inert drip retaining agent does not react chemically with the adhesive.

6. The adhesive stick according to any of the foregoing claims, **characterised in that** the inert drip retaining agent remains in the solid state at least at temperatures below 200°C.

7. The adhesive stick according to any of the foregoing claims, **characterised in that** the inert drip retaining agent comprises a thermoplastic resin.

8. The adhesive stick according to any of the foregoing claims, **characterised in that** the inert drip retaining agent comprises a polyamide.

9. The adhesive stick according to any of the foregoing claims, **characterised in that** the adhesive expands when the temperature increases.

10. The adhesive stick according to any of the foregoing claims, **characterised in that** the adhesive comprises a copolymer of ethylene and acrylic acid.

11. The adhesive stick according to claim 10, **characterised in that** the adhesive comprises 6% to 15% by weight of acrylic acid.

12. The adhesive stick according to claim 11, **characterised in that** the adhesive comprises 9% by weight of acrylic acid.

13. The adhesive stick according to any of the foregoing claims, **characterised in that** it has a diameter of between 1.1 millimetres and 1.3 millimetres.

14. A heat insulating profile that can be interposed between two thermally conductive profiles to create a thermal break, **characterised in that** it comprises an adhesive stick as claimed in one or more of the claims from 1 to 13.

15. A method for manufacturing an adhesive stick applicable to a heat insulating profile, the heat insulating profile being designed to be interposed between thermally conductive profiles to create a thermal break, the method being **characterised in that** it comprises the steps:
- mixing an adhesive and an inert drip retaining agent;
- shaping the mixture of adhesive and inert drip retaining agent to make the adhesive stick, the shaping step comprising the step of extruding the mixture.

16. The method according to claim 15, **characterised in that** prior to mixing, the adhesive and the inert drip retaining agent are in a granular form.

17. The method according to claim 15 or 16, **characterised in that** it comprises the step of drying the adhesive and the inert drip retaining agent before mixing them.

18. The method according to claim 15 or 16 or 17, **characterised in that** it comprises the step of heating the mixture to a softening point in order to facilitate shaping.

19. The method according to any of the foregoing claims from 15 to 18, **characterised in that** the shaping step comprises the step of crushing the mixture in order to better blend the adhesive and the inert drip retaining agent.

## Patentansprüche

1. Ein Klebstift, anbringbar an einem wärmeisolierenden Profil, das wiederum dazu bestimmt ist, zwischen wärmeleitenden Profilen eingesetzt zu werden, um eine Thermosperre zu bilden, wobei der Klebstift **dadurch gekennzeichnet ist, dass** er eine Mischung enthält, die aus einem Klebstoff und aus einem trägen, tropfenbindenden Material besteht.

2. Klebstift nach Patentanspruch 1, **dadurch gekennzeichnet, dass** die Mischung 30% bis 50% Gewichtsanteil aus dem trägen, tropfenbindenden Material und entsprechend aus 70% bis 50% Gewichtsanteil aus Klebstoff besteht.

3. Klebstift nach Patentanspruch 1 oder 2, **dadurch gekennzeichnet, dass** die Mischung aus Klebstoff und trägem, tropfenbindenden Material heterogen ist.

4. Klebstift nach Patentanspruch 1 oder 2 oder 3, **dadurch gekennzeichnet, dass** der Klebstoff und das träge, tropfenbindende Material gleichmässig in der Mischung verteilt sind.

5. Klebstift nach einem beliebigen der vorstehenden Patentansprüche von 1 bis 4, **dadurch gekennzeichnet, dass** das träge, tropfenbindende Material nicht chemisch mit dem Klebstoff reagiert.

6. Klebstoff nach einem beliebigen der vorstehenden Patentansprüche, **dadurch gekennzeichnet, dass** das träge, tropfenbindende Material wenigstens bei Temperaturen unter 200°C in festem Zustand bleibt.

7. Klebstoff nach einem beliebigen der vorstehenden Patentansprüche, **dadurch gekennzeichnet, dass** das träge, tropfenbindende Material ein thermoplastisches Harz enthält.

8. Klebstoff nach einem beliebigen der vorstehenden Patentansprüche, **dadurch gekennzeichnet, dass** das träge, tropfenbindende Material ein Polyamid enthält.

9. Klebstoff nach einem beliebigen der vorstehenden Patentansprüche, **dadurch gekennzeichnet, dass** der Klebstoff expandiert, wenn sich die Temperatur erhöht.

10. Klebstift nach einem beliebigen der vorstehenden Patentansprüche, **dadurch gekennzeichnet, dass** der Klebstoff ein Kopolymer aus Äthylen und Acrylsäure enthält.

11. Klebstift nach Patentanspruch 10, **dadurch gekennzeichnet, dass** der Klebstoff 6% bis 15% Gewichtsanteil aus Acrylsäure enthält.

12. Klebstift nach Patentanspruch 11, **dadurch gekennzeichnet, dass** der Klebstoff 9% Gewichtsanteil aus Acrylsäure enthält.

13. Klebstift nach einem beliebigen der vorstehenden Patentansprüche, **dadurch gekennzeichnet, dass** er einen Durchmesser zwischen 1,1 Millimeter und 1,3 Millimeter hat.

14. Wärmeisolierendes Profil, das zwischen zwei wärmeleitenden Profilen eingesetzt werden kann, um eine Thermosperre zu bilden, **dadurch gekennzeichnet, dass** es einen Klebstift enthält, wie er in einem oder mehreren der Patentansprüche von 1 bis 13 beansprucht wird.

15. Verfahren zur Herstellung eines Klebstiftes, anbringbar an einem wärmeisolierenden Profil, wobei das wärmeisolierende Profil dazu bestimmt ist, zwischen wärmeleitenden Profilen eingesetzt zu werden, um eine Thermosperre zu bilden, wobei das Verfahren **dadurch gekennzeichnet ist, dass** es die Phasen enthält:
- Mischen eines Klebstoffes und eines trägen, tropfenbindenden Materials;
- Formen der Mischung aus Klebstoff und trägem, tropfenbindenden Material, um den Klebstift zu bilden, wobei die Formphase die Phase der Extrusion der Mischung enthält.

16. Verfahren nach Patentanspruch 15, **dadurch gekennzeichnet, dass** vor dem Mischen der Klebstoff und das träge, tropfenbindende Material eine Granulatform haben.

17. Verfahren nach Patentanspruch 15 oder 16, **dadurch gekennzeichnet, dass** es die Phase des Trocknens des Klebstoffes und des trägen, tropfenbindenden Materials vor dem Mischen derselben enthält.

18. Verfahren nach Patentanspruch 15 oder 16 oder 17, **dadurch gekennzeichnet, dass** es die Phase der Erhitzens der Mischung bis zu einem Erweichungspunkt enthält, um das Formen zu erleichtern.

19. Verfahren nach einem beliebigen der vorstehenden Patentansprüche von 15 bis 18, **dadurch gekennzeichnet, dass** die Formphase die Phase des Brechens der Mischung enthält, um den Klebstoff und das träge, tropfenbindende Material besser miteinander zu vermischen.

## Revendications

1. Bâton adhésif applicable sur un profilé thermiquement isolant, le profilé thermiquement isolant étant à son tour conçu pour être interposé entre des profilés thermiquement conducteurs pour créer une rupture de pont thermique, le bâton adhésif étant **caractérisé en ce qu'**il comprend un mélange comprenant un adhésif et un agent inerte anti-gouttage.

2. Bâton adhésif selon la revendication 1, **caractérisé en ce que** le mélange comprend 30% à 50% en poids d'agent inerte anti-gouttage et, en conséquence, 70% à 50% en poids d'adhésif.

3. Bâton adhésif selon la revendication 1 ou 2, **caractérisé en ce que** le mélange d'adhésif et d'agent inerte anti-gouttage est hétérogène.

4. Bâton adhésif selon la revendication 1, 2 ou 3, **caractérisé en ce que** le l'adhésif et l'agent inerte anti-gouttage sont uniformément distribués dans le mélange.

5. Bâton adhésif selon n'importe laquelle des précédentes revendications 1 à 4, **caractérisé en ce que** l'agent inerte anti-gouttage ne réagit pas chimiquement avec l'adhésif.

6. Bâton adhésif selon n'importe laquelle des revendications précédentes, **caractérisé en ce que** l'agent inerte anti-gouttage reste à l'état solide au moins au-dessous d'une température de 200°C.

7. Bâton adhésif selon n'importe laquelle des revendications précédentes, **caractérisé en ce que** l'agent inerte anti-gouttage comprend une résine thermoplastique.

8. Bâton adhésif selon n'importe laquelle des revendications précédentes, **caractérisé en ce que** l'agent inerte anti-gouttage comprend un polyamide.

9. Bâton adhésif selon n'importe laquelle des revendications précédentes, **caractérisé en ce que** l'adhésif augmente de volume lorsque la température augmente.

10. Bâton adhésif selon n'importe laquelle des revendications précédentes, **caractérisé en ce que** l'adhésif comprend un copolymère d'éthylène et d'acide acrylique.

11. Bâton adhésif selon la revendication 10, **caractérisé en ce que** l'adhésif comprend de 6% à 15% en poids d'acide acrylique.

12. Bâton adhésif selon la revendication 11, **caractérisé en ce que** l'adhésif comprend 9% en poids d'acide acrylique.

13. Bâton adhésif selon n'importe laquelle des revendications précédentes, **caractérisé en ce qu'**il présente un diamètre compris entre 1,1 et 1,3 millimètres.

14. Profilé thermiquement isolant pouvant être interposé entre deux profilés thermiquement conducteurs pour créer une rupture de pont thermique, **caractérisé en ce qu'**il comprend un bâton adhésif tel que celui revendiqué dans une ou plusieurs des revendications 1 à 13.

15. Procédé pour la production d'un bâton adhésif applicable à un profilé thermiquement isolant, le profilé thermiquement isolant étant conçu pour être interposé entre des profilés thermiquement conducteurs pour créer une rupture de pont thermique, le procédé étant **caractérisé en ce qu'**il comprend les phases suivantes:
- mélange d'un adhésif et d'un agent inerte anti-gouttage;
- formage du mélange d'adhésif et d'agent inerte anti-gouttage pour produire le bâton adhésif, la phase de formage comprenant la phase d'extrusion du mélange.

16. Procédé selon la revendication 15, **caractérisé en ce qu'**avant le mélange, l'adhésif et l'agent inerte anti-gouttage sont sous forme de granulés.

17. Procédé selon la revendication 15 ou 16, **caractérisé en ce qu'**il comprend la phase de séchage de l'adhésif et de l'agent inerte anti-gouttage avant leur mélange.

18. Procédé selon la revendication 15, 16 ou 17, **caractérisé en ce qu'**il comprend la phase de chauffage du mélange jusqu'à un point de ramollissement de manière à faciliter la mise en forme.

19. Procédé selon n'importe laquelle des précédentes revendications 15 à 18, **caractérisé en ce que** la phase de formage comprend la phase d'écrasement du mélange pour mieux lier l'adhésif et l'agent inerte anti-gouttage.
